# Europäisches Patentamt

# European Patent Office

# Office européen des brevets

(19)

(11) Veröffentlichungsnummer: **0 117 275 B1**

(12) **EUROPÄISCHE PATENTSCHRIFT**

(45) Veröffentlichungstag der Patentschrift:
**16.08.89**

(51) Int. Cl.⁴: **G 01 D 9/30,** G 01 D 15/16

(21) Anmeldenummer: **83108280.5**

(22) Anmeldetag: **23.08.83**

(54) **Schreibvorrichtung für Mehrfach-Punktschreiber.**

(30) Priorität: **21.12.82 DE 3247157**

(43) Veröffentlichungstag der Anmeldung:
**05.09.84 Patentblatt 84/36**

(45) Bekanntmachung des Hinweises auf die Patenterteilung:
**16.08.89 Patentblatt 89/33**

(84) Benannte Vertragsstaaten:
**AT CH DE FR GB IT LI NL SE**

(56) Entgegenhaltungen:
**DE-A- 3 140 888**
**FR-A- 2 370 960**
**GB-A- 2 098 735**
**US-A- 3 824 603**
**US-A- 4 210 917**

(73) Patentinhaber: **Hartmann & Braun Aktiengesellschaft, Gräfstrasse 97, D-6000 Frankfurt am Main 90 (DE)**

(72) Erfinder: **Höhl, Rudolf, Keltenstrasse 26, D-6000 Frankfurt am Main 56 (DE)**
Erfinder: **Herrlein, Erwin, Apostelstrasse 4, D-6000 Frankfurt am Main 71 (DE)**

(74) Vertreter: **Mack, Hermann, Hartmann & Braun AG Patente und Lizenzen Gräfstrasse 97, D-6000 Frankfurt (Main) 90 (DE)**

## Beschreibung

Die Erfindung bezieht sich auf eine Schreibvorrichtung für Mehrfach-Punktschreiber mit Farbe abgebenden saugfähigen Schreibkörpern.

Schreibvorrichtungen für Registrierinstrumente mit einem porösen Körper aus saugfähigem Werkstoff, von dem die Farbflüssigkeit auf einen Registrierstreifen gelangt, sind in der DE-A-19 43 389 und der FR-A-2 370 960 angegeben. Es werden einige Möglichkeiten der Ausbildung solcher Schreibkörper erwähnt, wobei hinsichtlich ihrer Führung und ihres Antriebs auf den Stand der Technik verwiesen wird.

Der Erfindung liegt die Aufgabe zugrunde, eine Schreibvorrichtung für Mehrfach-Punktschreiber mit derartigen Schreibkörpern zu schaffen, die bei kleinen Abmessungen in Bewegungsrichtung, einen großen Farbvorrat enthält und eine besonders schnelle Aufzeichnung auch alphanummerischer Zeichen in Punktzusammensetzung bei elektronischer Antriebssteuerung der Schreibvorrichtung ermöglicht. Diese Aufgabe wird durch die in den Ansprüchen gekennzeichneten Mittel gelöst.

Ein Ausführungsbeispiel der Erfindung zur Aufzeichnung der Meßwerte von sechs Meßstellen wird anhand der beigefügten Zeichnungen erläutert, wobei

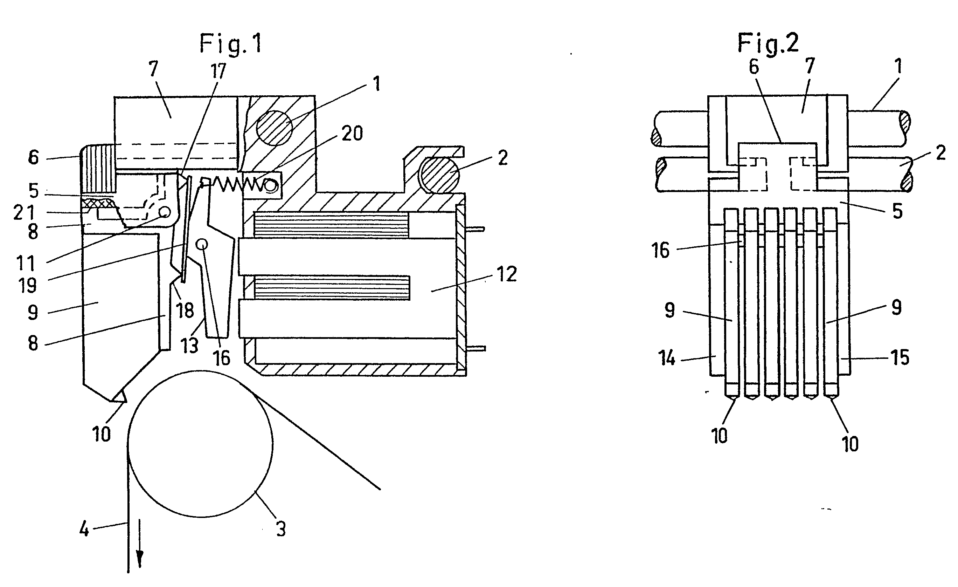

Fig. 1 eine Seitenansicht der geöffneten Vorrichtung teilweise im Schnitt und

Fig. 2 eine Frontansicht ist.

Wie bei Mehrfach-Punktschreibern häufig konzipiert, ist die Schreibvorrichtung auf zwei Stangen 1, 2 quer zur Transportrichtung eines über eine Rolle 3 ablaufenden Aufzeichnungsträgers 4 z.B. durch einen Seilantrieb einstellbar. Ihre Stellung entspricht dem Meßwert des an den Mehrfach-Punktschreiber jeweils angeschalteten Meßfühlers.

In einem Magazin 5, das mit einem Griff 6 in eine Halterung 7 der Schreibvorrichtung einrastend eingeführt ist, befinden sich nebeneinander sechs flache, mit ihren Breitseiten senkrecht zur Bewegungsrichtung der Vorrichtung ausgerichtete, an Fassungsteile 8 angesetzte Schreibkörper 9 aus porösem Material, mit der z.B. in der DE-A-19 43 389 beschriebenen saugfähigen Eigenschaft. Die Schreibkörper enthalten Schreibflüssigkeiten unterschiedlicher Farbe. Ihre äußeren Flächen sind verdichtet, um eine gegenseitige Benetzung und ein Verdunsten der Schreibflüssigkeit zu unterbinden. Jeder Schreibkörper weist an der unteren Schmalseite eine Schreibspitze 10 auf, die bei kurzer Berührung mit dem bewegten Aufzeichnungsträger durch Abgabe von Schreibflüssigkeit einen Farbpunkt auf diesen druckt. Hierzu weisen die Fassungsteile 8 der Schreibkörper für den Druckvorgang eine im Magazin 5 gelagerte Achse 11 auf.

Den Schreibkörpern sind entsprechend flach dimensionierte Elektromagnete 12 mit Ankern 13 zugeordnet, die um eine in Seitenwänden 14 und 15 der Vorrichtung gelagerte Achse 16 beweglich sind. Ansätze 17 und 18 an den Fassungsteilen 8 der Schreibkörper kontaktieren jeweils mit an den Ankern befestigten Blattfedern 19.

Um die Schwenkbewegung der Schreibkörper mit möglichst geringem Kraftaufwand auslösen zu können, ist die Achse 11 nahe der Schwerpunktachse der Schreibkörper und deren Fassungsteile angeordnet. Die Achse der Magnetanker ist so gelegt, daß eine geringe Anzugsbewegung der Anker eine größere Bewegung der Schreibspitzen hervorruft, wobei die Ansätze 17 und 18 an den Fassungsteilen mit den Blattfedern im Sinne einer möglichst reibungslosen Kraftübertragung und eines elastischen Aufsetzens der Schreibspitzen auf den Aufzeichnungsträger 4 der Rolle 3 wirken. An den Ankern angebrachte Federn 20 bewirken, daß bei nicht erregten Elektromagneten die Schreibspitzen vom Aufzeichnungsträger abheben und die Schreibkörper mit ihren Fassungsteilen sich an Anschläge 21 im Magazin anlegen.

Beim Meßvorgang wird der Versatz der Schreibspitzen in Bewegungsrichtung der Schreibvorrichtung durch das Meßsystem des Punktschreibers berücksichtigt. Alphanummerische Zeichen können durch entsprechende Ansteuerung der Elektromagnete und des Vorschubs des Aufzeichnungsträgers in Punktzusammensetzung auf den Aufzeichnungsträger geschrieben werden.

## Patentansprüche

1. Schreibvorrichtung für Mehrfach-Punktschreiber, die quer zur Transportrichtung eines Aufzeichnungsträgers geführt und mit Farbe abgebenden saugfähigen Schreibkörpern bestückt ist, dadurch gekennzeichnet, daß mit Fassungsteilen (8) verbundene Schreibkörper (9) von schmaler plattenförmiger Gestalt mit einer Schreibspitze (10) an einer Schmalseite vorgesehen sind, die nahe um ihre Schwerpunktachse (11) senkrecht zur Oberfläche schwenkbar in einem Magazin (5) angeordnet sind, das in eine Halterung (7) der Schreibvorrichtung einrastend einsetzbar ist, wobei die Schreibkörper mit Ankern (13) von Elektromagneten (12) kontaktieren zur Auslösung einer Schwenkbewegung der Schreibkörper um Meßpunkte oder Textinformation auf den Aufzeichnungsträger durch die Schreibspitzen zu drucken.

2. Schreibvorrichtung nach Anspruch 1, dadurch gekennzeichnet, daß der Berührungskontakt eines Schreibkörpers (8, 9) mit dem zugehörigen Magnetanker (13) über eine an diesem befestigte Blattfeder (19) erfolgt.

3. Schreibvorrichtung nach Anspruch 2, dadurch gekennzeichnet, daß zwei am Schreibkörper befindliche Ansätze (17, 18) mit der Blattfeder (19) kontaktieren.

## Claims

1. A printing device for multi-dot printers, which is guided transversely to the direction of transport of a recording medium and is equipped with absorbent print elements which discharge ink, characterised in that print element (9) connected to frame parts (8) and of narrow plate-type formation are provided on one narrow side with a printing tip (10), said print elements (9) being arranged in a magazine (5) and being pivotal substantially about their centre of gravity axis (11) and perpendicular to the surface, said magazine being capable of being locked into position in a mounting (7) of the printing device, in which the print elements make contact with armatures (13) of electromagnets (12) in order to trigger a pivotal movement of the print elements so as to print check dots or text information on to the recording medium by means of the printing tips.

2. A printing device according to claim 1, characterised in that the point of contact of a print element (8, 9) with its related magnetic armature (13) takes place by means of a leaf spring (19) fixed thereto.

3. A printing device according to claims 2, characterised in that two lugs (17, 18) located on the print element are in contact with the leaf spring (19).

**Revendications**

1. Dispositif d'écriture pour enregistreur à points multiples, qui est entraîné perpendiculairement au sens de transfert d'un support d'enregistrement et est muni de corps enregistreurs absorbant et restituant de la couleur, caractérisé en ce que, unis à des pièces de châssis (8) des corps enregistreurs (9) de configuration étroite et en forme de plaques sont prévus avec une pointe à écrire (10) fixée sur un côté étroit, sont rangés dans un magasin (5) et peuvent pivoter perpendiculairement à leur surface autour d'un axe situé près de leur axe du centre de gravité (11) et le magasin est fixé par verrouillage dans un emplacement (7) du dispositif d'écriture où les corps enregistreurs établissent un contact avec les palettes mobiles (13) pour le déclenchement d'un mouvement de pivotement des corps enregistreurs dans le but d'imprimer des points de mesure ou une information de texte sur le support d'enregistrement au moyen des pointes à écrire.

2. Dispositif d'écriture selon la revendication 1, caractérisé en ce que, le contact d'un corps enregistreur (8, 9) avec la palette mobile de relais (13) a lieu par l'intermédiaire d'un ressort à lames (19) fixé à celle-ci.

3. Dispositif d'écriture selon la revendication 2, caractérisé en ce que, deux tétons (17, 18) se trouvant sur le corps enregistreur établissent le contact avec le ressort à lames (19).

Fig.1

Fig.2

EP 0 117 275 B1